# EUROPEAN PATENT SPECIFICATION

(11) **EP 1 037 462 B1**
(45) Date of publication and mention of the grant of the patent: **01.03.2006**
(21) Application number: 00104937.8
(22) Date of filing: 08.03.2000
(51) Int. Cl.: H04N 7/16, H04N 5/52, H04N 17/00

(54) **Amplitude control for broadcast data receiving systems**
Amplitudensteuerung für Rundfunkdatenempfangssysteme
Contrôle d'amplitude pour des systèmes de réception de données diffusées

(30) Priority: 15.03.1999 GB 9905836
(43) Date of publication of application: 20.09.2000
(73) Proprietor: Pace Micro Technology PLC, Saltaire, Shipley, BD14 3LF (GB)
(72) Inventor: Coe, Peter, Skipton, North Yorkshire BD23 2TE (GB)
(74) Representative: Wood, Graham

(56) References cited:
- GB-A- 2 314 983
- US-A- 4 864 613
- US-A- 4 969 050
- US-A- 5 640 688

## Description

The present invention is related to a television programme broadcast system and in particular, although not exclusively, to a broadcast system wherein the data is transferred via a cable network system of the type which is well known and allows for the transfer of digital data to a receiver and to a display screen, typically of a television set, provided in the premises. However, reference hereonin to cable systems should not be taken to narrow the scope of the invention specifically to cable television systems.

In cable broadcast systems, data signals which represent video, audio and/or text which can be displayed to the user of the apparatus at premises and/or data which may be used by computer or other control/monitoring systems are transmitted via a cable network to a number of broadcast data receivers. Each receiver, which can be connected to a television set or monitor for viewing or provided as an integral part thereof, receives the encoded data, decodes the same and then generates a video display on the television or monitor and an audio display via speakers to generate programmes. The use of digital data in particular allows data for a large number of channels to be broadcast and the user can selectively view the same.

In some cable systems data from the cable network is fed in an unmodified form to the receiver and this allows customers to receive free analogue or digital signals on their television or monitor (hereinafter referred to as television) or television network. This means that they have the capability to receive the cable signals and that the user of the cable network can receive and watch a range of channels and programmes without direct payment to the provider. This type of function is commonly called a loop-through system and in order to implement this function it is necessary in the television output to provide a radio frequency (RF) amplitude isolation from the cable network. It is also necessary to include a signal gain between the connection to the cable network and the output to the television. However, the gain which is required to be provided may in some instances be a loss and in all instances, the level of gain or loss which is required to be provided varies from network to network and from television to television, dependent on the particular location of the television output and cable network receiving equipment. Thus it is not presently possible to provide the RF isolation and signal gain in a uniform manner and so presently it is left to the person installing the equipment, (typically provided by the cable network operator and visiting the premises of the user) to firstly decide whether gain or loss is required to be provided and, the level of the same. This is unsatisfactory as the subscriber to the cable network is not capable of deciding which is best suited and the manufacturer of the TV and/or cable network receiver is also not capable of controlling the settings of operation of the system which means that if the installer is unqualified, inexperienced or simply not concerned with providing the best service, the settings for RF isolation and signal gain may be incorrect. This can adversely affect the subscriber's use of the cable network service and/or the equipment manufacturers.

US4864613 discloses a broadcast system where the broadcast data receiving means includes an amplifier for matching the strength of a signal from a low pass filter to that of the signal from a second filter but does not provide any suggestion as to how this matching can be used to control the amplifier and therefore the installer is required to take action to adjust each broadcast data receiving means manually at each installation which can mean that the problems discussed above result and which has been identified as a problem by cable network system providers and the aim of the present invention is to provide a solution to the problem.

In a first aspect of the invention there is provided a television broadcast system comprising a receiving means having an input connected to a broadcast system for receiving modulated input signals carrying unmodified and encoded data which is broadcast from a remote location and an output for outputting modulated output signals carrying unmodified and decoded data, said receiving means including a signal processing component and TV remodulation component for decoding and processing said encoded data to allow the generation of remodulated signals carrying decoded video, audio and/or text data to be output to a television connected to the receiving means via the output for the display of the same, said receiving means further including an amplifier having a signal gain value for generating amplified or attenuated signals, a signal splitter connected to the input, supplying signals to the signal processing component and to the amplifier, and an RF isolation circuit connected to the output for combining said amplified or attenuated signals and said remodulated signals and characterised in that at the time of installation of said receiving means the determination of the signal gain value is generated by the receiving means and the amplifier is automatically controlled accordingly.

In one embodiment the automatic setting of the gain and/or loss value at the receiving means is generated by the monitoring of the back signal strength from a further receiver connected to the broadcast system at the same premises. The further receiver is connected to the same broadcast system as the receiver which is being installed and so by measuring the back signal strength to the further receiver the setting of gain or loss and the level of the same can be performed to allow for the levelling of the amplitude. Thus the receiving means which is being set or installed is provided with a gain control amplifier which is adjusted to set the gain or loss to the required setting via the results obtained from the further receiver at the same location.

In one embodiment the automatic setting of the signal gain value can be set autonomously by the receiving means which includes the data loop-through receiver function as an integral part thereof.

In a further embodiment the receiving means includes an amplifier in the form of a gain control amplifier which is adjusted to set the gain or loss to the required setting following instructions from the processor of the receiving means in which the gain control amplifier is provided.

Typically the broadcast data signal received at the input is split into at least two parts, a first part passing through a gain control amplifier, and the second part passing through a signal processing and remodulation function within the broadcast data receiving means prior to combining of the two signal parts prior to the output.

The receiving means is also known as a set top box and includes a means to decode the data received which is typically provided in an encoded format to allow the efficient transmission of the same.

By providing the automatic set-up of the signal level of the loop-through, the manufacturers of the apparatus and cable network providers can be sure that the apparatus is being set at each premises to acceptable standards of service which means that the user or users viewing the signal received will be able to view and listen to satisfactory video and audio display. Further advantages are provided to the installer of the apparatus as the time required for installation of the equipment is reduced as the installer is no longer required to calculate, assess and set the loop-through gain or loss values and furthermore, the need for repeat visits by the installer to re-set or adjust loop-through signal levels if they are wrongly set is also removed, thereby saving time and expense to the installer and again to the cable network provider.

A specific embodiment of the invention is now described with reference to the accompanying drawings, wherein:

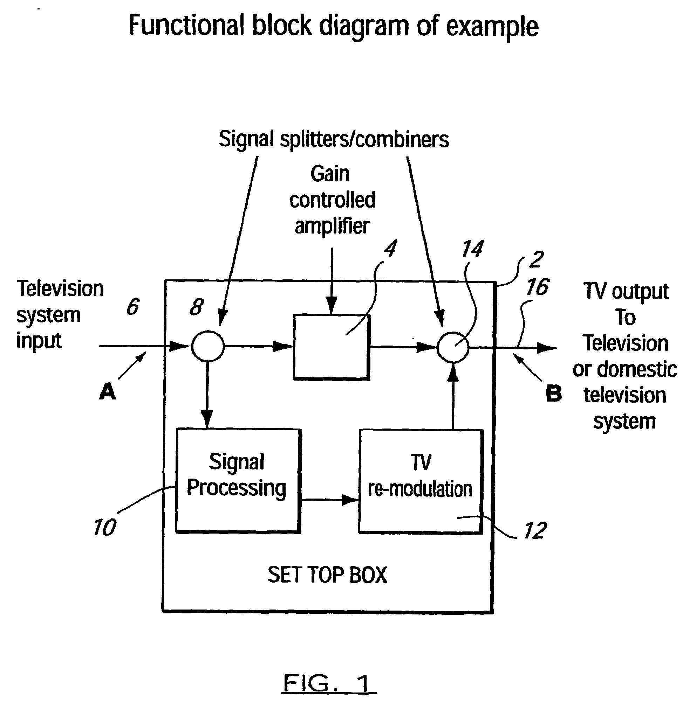

Figure 1 illustrates the functional block diagram of one embodiment of the invention;
Figure 2 illustrates the signal characteristic of the apparatus of Figure 1 at point A; and
Figure 3 illustrates the signal characteristic of the apparatus of Figure 1 at point B.

The present invention provides a means for controlling the gain and/or loss and provides, in this case, in a broadcast data receiver 2 a gain controlled amplifier 4 which allows the determination of the gain or loss required in each broadcast data receiver apparatus. The apparatus comprises a television system input 6 which leads to a signal splitter 8 which splits the signal so that one part proceeds to the signal processing component 10 and the other part of the signal passes through the gain controlled amplifier 4 as shown. The first part of the signal which passes through the signal processing stage then passes to the TV re-modulation component 12 and returns to a signal combiner 14 where the signal is combined with the second part of the signal which is passed through the gain controlled amplifier 4. From the signal combiner 14 the signal passes from the broadcast data receiver to the output 16 and then to the television or a television system.

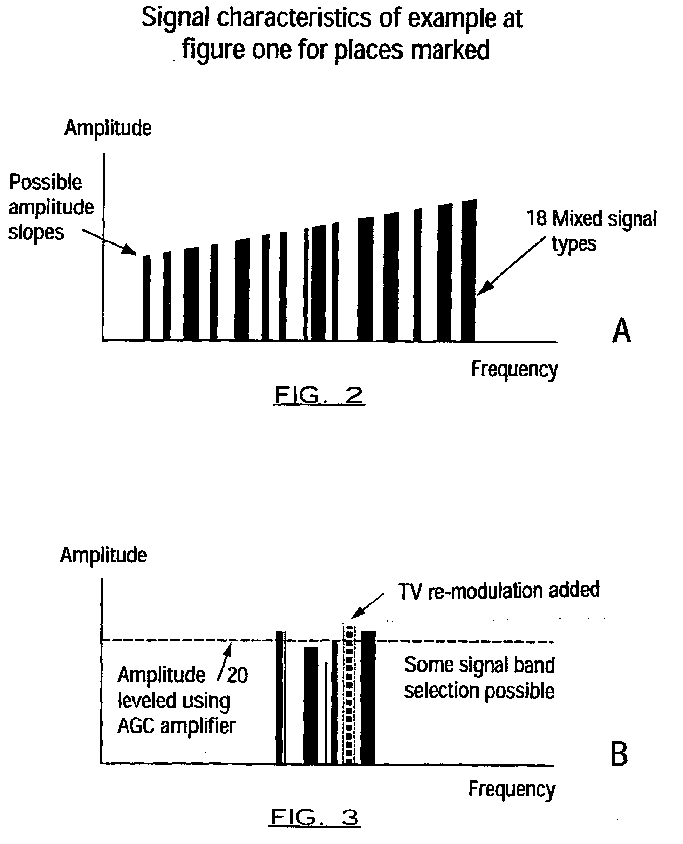

A typical data signal characteristic of the broadcast signal received at input 6 at point A, is illustrated in Figure 2. This Figure indicates in the graph of amplitude against frequency how there are a series of mixed signal types 18 and indicates an amplitude sloping occurring 20. A mixture of different types of modulated signal, such as for example, including the loop-through signals and other cable network data signals are present and, due, in this case, to the receiver being connected at the inlet to a cable distribution system which allows the transmission of the data from the remote location, an amplitude response may be superimposed over all signals such as an amplitude slope, as shown, or an amplitude rise, with frequency.

It is this slope or rise which the apparatus according to the invention can take into account automatically with the provision of the gain controlled amplifier 4 so that at point B at the output 16 of the broadcast data receiver, as illustrated in Figure 3, it is shown that the amplitude can be levelled along the line 20 by use of the gain controlled amplifier.

In use therefore, the part of the input signal which passes through the gain controlled amplifier 4 includes a frequency band selection (filtering) and a TV re-modulator RF carrier is added to the signal. The gain (or loss) control of the amplifier is adjusted so that the level of the signals which passes through is equivalent to that of the re-modulated part of the signal which is generated via the signal processing and TV re-modulation components 10 and 12.

The provision of the gain controlled amplifier 4 to provide the signal adjustment to include gain or loss as required means that the same can be performed automatically within the apparatus, therefore no installer intervention is required and furthermore no re-visit by the installer to make corrections to the setting is required.

## Claims

1. A television broadcast system comprising a receiving means (2) having an input (6) connected to a broadcast system for receiving modulated input signals carrying unmodified and encoded data which is broadcast from a remote location and an output (16) for outputting modulated output signals carrying unmodified and decoded data, said receiving means including a signal processing component (10) and TV remodulation component (12) for decoding and processing said encoded data to allow the generation of remodulated signals carrying decoded video, audio and/or text data to be output to a television connected to the receiving means via the output (16) for the display of the same, said receiving means further including an amplifier (4) having a signal gain value for generating amplified or attenuated signals, a signal splitter (8) connected to the input (6), supplying signals to the signal processing component and to the amplifier, and an RF isolation circuit connected to the output (16) for combining said amplified or attenuated signals and said remodulated signals and **characterised in that** at the time of installation of said receiving means the determination of the signal gain value is generated by the receiving means and the amplifier is automatically controlled accordingly.

2. A television broadcast system according to claim 1 **characterised in that** the receiving means (2) is provided with a gain control amplifier (4) which is adjusted to set the gain to the required setting via results obtained from a further data receiver at the same location.

3. A television broadcast system according to claim 1 **characterised in that** the automatic setting of the signal gain value is set autonomously by the receiving means which includes the data loop-through receiver function as an integral part thereof.

## Patentansprüche

1. Fernsehrundfunksystem, das Folgendes umfasst: ein Empfangsmittel (2) mit einem Eingang (6), der mit einem Rundfunksystem zum Empfangen von modulierten Eingangssignalen verbunden ist, die unmodifizierte und codierte Daten führen, die von einem fernen Ort ausgestrahlt werden, und einem Ausgang (16) zum Ausgeben von modulierten Ausgangssignalen, die unmodifizierte und decodierte Daten führen, wobei das genannte Empfangsmittel eine Signalverarbeitungskomponente (10) und eine TV-Ummodulierungskomponente (12) zum Decodieren und Verarbeiten der genannten codierten Daten beinhaltet, um die Erzeugung von ummodulierten Signalen zu ermöglichen, die decodierte Video-, Audio- und/oder Textdaten führen, die an einen Fernseher ausgegeben werden sollen, der mit dem Empfangsmittel über den Ausgang (16) zur Anzeige derselben verbunden ist, wobei das genannte Empfangsmittel ferner einen Verstärker (4) mit einem Signalverstärkungswert zum Erzeugen von verstärkten oder gedämpften Signalen beinhaltet, einen Signalteiler (8), der mit dem Eingang (6) verbunden ist und Signale zur Signalverarbeitungskomponente und zum Verstärker liefert, und eine RF-Isolationsschaltung, die mit dem Ausgang (16) verbunden ist, um die genannten verstärkten oder gedämpften Signale und die genannten ummodulierten Signale zu kombinieren, und **dadurch gekennzeichnet, dass** bei der Installation des genannten Empfangsmittels der Signalverstärkungswert vom Empfangsmittel ermittelt und der Verstärker dementsprechend automatisch gesteuert wird.

2. Fernsehrundfunksystem nach Anspruch 1, **dadurch gekennzeichnet, dass** das Empfangsmittel (2) mit einem Verstärkungsregelungsverstärker (4) ausgestattet ist, der zum Einstellen der Verstärkung auf den gewünschten Wert über von einem weiteren Datenreceiver am selben Ort erhaltene Ergebnisse justiert wird.

3. Fernsehrundfunksystem nach Anspruch 1, **dadurch gekennzeichnet, dass** die automatische Einstellung des Signalverstärkungswertes autonom durch das Empfangsmittel vorgenommen wird, das die Datendurchschleif-Receiver-Funktion als integralen Bestandteil davon beinhaltet.

## Revendications

1. Système de diffusion de télévision comprenant un moyen de réception (2) qui possède une entrée (6) laquelle est connectée à un système de diffusion destiné à recevoir des signaux d'entrée modulés portant des données non-modifiées et codées lesquelles sont diffusées à partir d'un emplacement distant, ainsi qu'une sortie (16) destinée à fournir des signaux de sortie modulés portant des données non-modifiées et décodées, ledit moyen de réception incluant un composant de traitement de signaux (10) et un composant de remodulation TV (12) afin de décoder et de traiter lesdites données codées pour permettre la génération de signaux remodulés portant des données décodées de type vidéo, audio et/ou texte destinées à être émises à un téléviseur lequel est connecté au moyen de réception par l'intermédiaire de la sortie (16) pour l'affichage de celles-ci, ledit moyen de réception incluant en outre un amplificateur (4) qui possède une valeur de gain de signal afin de générer des signaux amplifiés ou bien atténués, un séparateur de signaux (8) qui est connecté sur l'entrée (6) et qui fournit des signaux au composant de traitement de signaux et à l'amplificateur, et un circuit d'isolation RF qui est connecté sur la sortie (16) afin de combiner lesdits signaux amplifiés ou atténués ainsi que lesdits signaux remodulés, et **caractérisé en ce qu'**au moment de l'installation dudit moyen de réception, la détermination de la valeur de gain du signal est générée par le moyen de réception, et l'amplificateur est automatiquement contrôlé en conséquence.

2. Système de diffusion de télévision, selon la revendication 1, **caractérisé en ce que** le moyen de réception (2) est équipé d'un amplificateur à commande de gain (4) qui est ajusté de façon à régler le gain sur le paramètre requis grâce aux résultats obtenus à partir d'un récepteur de données supplémentaire prévu au même emplacement.

3. Système de diffusion de télévision, selon la revendication 1, **caractérisé en ce que** le réglage automatique de la valeur du gain du signal est effectué de façon autonome par le moyen de réception lequel inclut la fonction de réception en boucle des données à titre de partie intégrante de celui-ci.
